# EUROPÄISCHE PATENTSCHRIFT

(11) **EP 2 921 431 B1**
(45) Veröffentlichungstag und Bekanntmachung des Hinweises auf die Patenterteilung: **04.05.2016**
(21) Anmeldenummer: 15000171.7
(22) Anmeldetag: 21.01.2015
(51) Int. Cl.: B65G 17/18, B65G 47/96, B07C 3/08

(54) **Sortierförderer mit auf Fahrwagen abgestützten Tragwagen**
Sorting conveyor with transport carts supported on vehicles
Convoyeur de tri avec wagons porteurs montés sur chariots

(30) Priorität: 21.03.2014 DE 102014004089
(43) Veröffentlichungstag der Anmeldung: 23.09.2015
(73) Patentinhaber: BEUMER GmbH & Co. KG, 59269 Beckum (DE)
(72) Erfinder: Heitplatz, Heino, 48317 Drensteinfurt (DE); Jesper, Jan Josef, 34431 Marsberg (DE)
(74) Vertreter: Philipp, Matthias

(56) Entgegenhaltungen:
- EP-A1- 0 718 220
- DE-A1- 2 510 522
- US-A1- 2013 248 323

## Beschreibung

Die Erfindung betrifft einen Sortierförderer mit einer Reihe von Fahrwagen, die entlang einer Fahrwagenführung mit zwei beabstandeten parallelen Fahrschienen in einer Fahrt- oder Förderrichtung antreibbar umlaufend geführt sind, nach Anspruch 1.

Aus der DE 25 10 522 A1 ist ein Plattenförderer nach dem Umlaufprinzip bekannt, der bei Horizontal- und Vertikalförderung und bei gleichzeitiger Kurvenfahrt eine in gleichbleibender horizontaler Lage verbleibende Transportplatte aufweist. Ein solcher Plattenförderer ist auch aus EP0718 220 A1 bekannt. Dieses Dokument beschreibt ein Förderer gemäß dem Oberbegriff des Anspruchs 1.

Die Aufgabe der Erfindung besteht darin, einen an sich bekannten Sortierförderer mit Fahrwagen, die in parallelen Fahrschienen geführt sind und in der Regel zum Betrieb in einer horizontalen Ebene vorgesehen ist, dahingehend weiterzuentwickeln, dass Fördergut, insbesondere Stückgut, entlang eines frei im Raum vorgebbaren Bahnverlaufs geführt werden kann, wobei neben horizontalen und vertikalen Kurven auch schraubenlinienförmige Abschnitte mit gleichzeitig horizontaler und vertikaler Fahrschienenkrümmung möglich sein sollen, während das jeweilige Lastaufnahmeelement eines Fahrwagens stets selbsttätig in einer horizontalen oder neutralen Position verbleiben soll.

Diese Aufgabe wird erfindungsgemäß durch einen Sortierförderer nach Anspruch 1 gelöst. Ein besonderer Vorteil der allseits drehbaren, gelenkigen Ankopplung eines Tragwagens an einen Fahrwagen besteht darin, dass die Tragschienen des Tragwagens mit relativ großzügigen Toleranzen in Bezug auf die Fahrschienen des Fahrwagens verlegt werden können, ohne dass es zu mechanischen Zwängen kommt, wenn Kurven, insbesondere räumliche Kurven oder schraubenlinienförmige Verläufe, durchfahren werden.

Zweckmäßigerweise ist vorgesehen, dass die beiden Fahrschienen so angeordnet sind, dass die Fahrwagen quer zur Fahrtrichtung gesehen stets horizontal ausgerichtet sind, wobei die Fahrschienen in einer Richtung quer zur Fahrtrichtung gesehen auf gleicher Höhe liegen können. Wenn die Fahrschienen in einer Richtung quer zur Fahrtrichtung gesehen auf gleicher Höhe liegen, erhält der Fahrwagen an keiner Stelle der Fahrwagenführung eine unerwünschte Querneigung. In entsprechender Weise ist bevorzugt vorgesehen, dass die Tragschienen als Rundprofil ausgebildet und so angeordnet sind, dass die Tragwagen quer zur Fahrtrichtung gesehen stets horizontal ausgerichtet sind, wobei die Tragschienen in einer Richtung quer zur Fahrtrichtung gesehen auf gleicher Höhe liegen können. Wenn die Tragschienen in einer Richtung quer zur Fahrtrichtung gesehen auf gleicher Höhe liegen, erhalten auch die Tragwagen keine unerwünschte Querneigung.

Bevorzugt ist jeder Fahrwagen auf jeder Fahrschiene mit einer Tragrolle und einer Seitenführungsrolle abgestützt. Vorzugsweise weist jeder Fahrwagen an einem bezüglich der Fahrtrichtung vorderen oder hinteren Ende eine Fahrwagentraverse auf, an deren seitlichen Enden jeweils eine Tragrolle und eine Seitenführungsrolle gelagert sind.

Jeder Fahrwagen kann an einem bezüglich der Fahrtrichtung vorderen Ende mit einem hinteren Ende eines vorausfahrenden Fahrwagens gekoppelt sein, insbesondere mittels eines in allen Richtungen drehbaren Koppelgelenks.

Bevorzugt weist jeder Tragwagen eine Tragwagentraverse auf, die an seitlichen Enden auf den Tragschienen abgestützt ist. Zweckmäßigerweise sind an jedem seitlichen Ende der Tragwagentraverse eine Tragrolle und eine Seitenführungsrolle angeordnet, wobei an jedem seitlichen Ende drei oder mehr Trag- und Seitenführungsrollen vorgesehen sein können.

In einer besonders zweckmäßigen Ausführungsform ist vorgesehen, dass an jedem seitlichen Ende der Tragwagentraverse ein Führungswagen angeordnet ist, der mindestens zwei in Fahrtrichtung voneinander beabstandete Trag- und Seitenführungsrollen aufweist, mit denen er auf einer Tragschiene abgestützt ist, und um eine quer zur Fahrtrichtung und horizontal verlaufende Führungsachse schwenkbar mit der Tragwagentraverse verbunden ist.

Ferner kann vorgesehen sein, dass die Tragwagentraverse durch ein um eine vertikal verlaufende Schwenkachse bewegbares Schwenklager schwenkbar.mit einem sich in Fahrtrichtung erstreckenden Tragwagenlängsträger verbunden ist, der seinerseits über das Gelenk auf dem Fahrwagen abgestützt ist.

Während die Möglichkeit besteht, dass jeweils ein Fahrwagen mit einem Tragwagen gekoppelt ist, kann vorgesehen sein, dass nur jeder zweite Fahrwagen mit einem Tragwagen gekoppelt ist, wobei insbesondere die letztgenannte Variante die Möglichkeit bietet, auf jedem Tragwagen zwei Lastaufnahmeelemente anzuordnen, die unabhängig voneinander zur Aufnahme oder Abgabe von Fördergut ansteuerbar sind.

Die Fahrwagen können eine Kette bilden und durch stationäre Antriebe angetrieben sein, wobei der Fahrwagen jeweils einen Zugträger bildet. Die stationären Antriebe können als Reibrad- oder induktive Antriebe ausgeführt sein.

Das Lastaufnahmeelement kann als Kippelement oder antreibbarer Quergurt ausgebildet sein und in an sich bekannter Weise an ausgewählten Entladestellen zur Entladung betätigbar sein, durch seitliches Kippen des Kippelements oder Antrieb des Quergurts quer zur Fahrtrichtung in einer gewünschten Abgaberichtung.

In einer bevorzugten Ausführungsform ist vorgesehen, dass das oder jedes Lastaufnahmeelement als eine elektrisch betätigbare Kippvorrichtung ausgebildet ist.

In einer Abwandlung kann vorgesehen sein, dass die Führungsachse in Fahrtrichtung gesehen nachlaufend in Bezug auf die Schwenkachse angeordnet ist. Alternativ kann die Führungsachse in einer die Schwenkachse enthaltenden Ebene bzw. diese schneidend angeordnet sein, oder auch vorlaufend, in Fahrtrichtung gesehen. Insbesondere besteht die Möglichkeit, dass einer der Führungswagen mittels eines Festlagers ohne Bewegungsspiel in Richtung der Führungsachse an der Tragwagentraverse gelagert ist, während der andere Führungswagen (60) mittels eines Loslagers mit Bewegungsspiel in Richtung der Führungsachse an der Tragwagentraverse gelagert ist.

Die Erfindung wird nachfolgend anhand eines Ausführungsbeispiels erläutert, wobei auf eine Zeichnung Bezug genommen ist, in der
Fig. 1 einen ansteigenden Bereich eines erfindungsgemäßen Sortierförderers zeigt,
Fig. 2 einen abfallenden Bereich des Sortierförderers nach Fig. 1 zeigt,
Fig. 3 einen gleichzeitig abfallenden und in einer Kurve geführten Bereich des Sortierförderers nach Fig. 1 und 2 zeigt,
Fig. 4 eine perspektivische Ansicht eines Fahrwagens und eines Tragwagens des Sortierförderers zeigt,
Fig. 5 eine schematische perspektivische Ansicht wesentlicher Elemente von Trag- und Fahrwagen des Sortierförderers zeigt,
Fig. 6 eine schematische Vorderansicht, teilweise im Schnitt, des Sortierförderers zeigt,
Fig. 7 eine schematische Seitenansicht des Förderers zeigt,
Fig. 8 eine schematische Draufsicht auf mehrere Fahr- und Tragwagen zeigt,
Fig. 9 eine Ansicht wie Fig. 8 ohne Lastaufnahmeelemente zeigt,
Fig. 10 eine Ansicht wie Fig. 1 in einer vergrößerten Ausschnittsdarstellung mit teilweise ausgeblendeten Fahrschienen zeigt,
Fig. 11 eine Seitenansicht eines Tragwagens in einer modifizierten Ausführungsform zeigt,
Fig. 12 eine perspektivische Ansicht zweier Trag- und Führungswagen in der modifizierten Ausführungsform zeigt, und
Fig. 13 - 15 Schnittansichten gemäß Schnittlinie A-A in Fig. 11 zeigen.

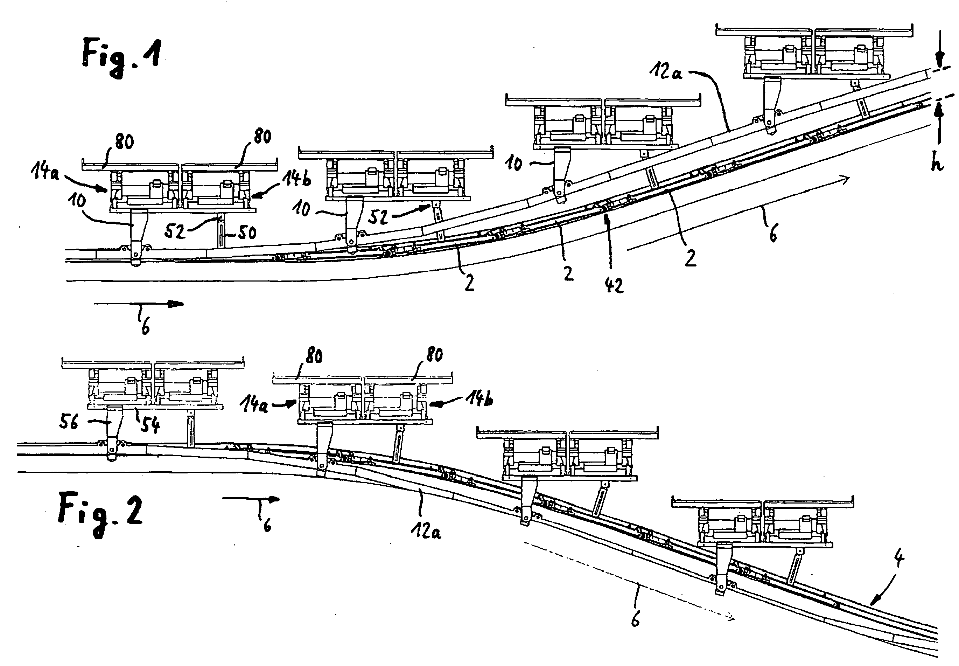

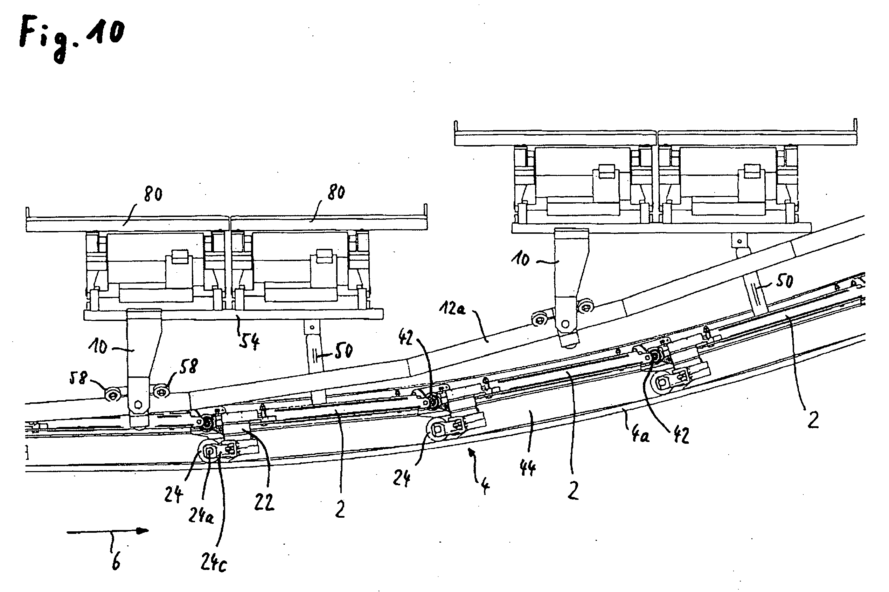

Fig. 1 bis 3 und 10 lassen den grundsätzlichen Aufbau eines erfindungsgemäßen Sortierförderers erkennen. Der Sortierförderer weist zunächst eine Reihe von gelenkig aneinander gekoppelten Fahrwagen 2 auf, die zur Bewegung in einer Förder- oder Fahrtrichtung 6 entlang einer Fahrwagenführurig 4 mit zwei parallelen Fahrschienen 4a, 4b geführt sind. Die Fahrwagenführung 4 ist in aller Regel in Form eines in sich geschlossenen umlaufenden Wegs ausgebildet, so dass auch die Fahrwagen umlaufend geführt sind.

Der Antrieb der Fahrwagen 2 in Fahrtrichtung 6 ist in unterschiedlicher Weise möglich. Es kann ein im Bereich der Fahrwagenführung 4 verlegtes, umlaufend verlaufendes Zugmittel wie Seil oder Kette vorgesehen sein, an dem einzelne oder alle Fahrwagen 2 befestigt sind.

Alternativ kann jeder einzelne Fahrwagen 2 mit einem Antriebsmotor versehen sein, der auf Antriebsräder wirkt, die ihrerseits mit der Fahrwagenführung zusammenwirken. Alternativ können die Fahrwagen mittels Induktions- oder Reibradantrieb antreibbar sein. Dabei besteht die Möglichkeit, dass nicht jeder Fahrwagen mit einem Antrieb versehen ist, sondern lediglich jeder zweite, dritte oder in noch größeren Abständen. Hierbei können die Fahrwagen eine fortlaufende Kette bilden, wobei jeder Fahrwagen einen Zugträger bildet.

Die Fahrschienen 4a, 4b sind in festem gegenseitigem Abstand parallel zueinander verlegt, wobei die Fahrschienen in einer Richtung quer zur Fahrtrichtung 6 gesehen auf gleicher Höhe liegen, so dass ein Fahrwagen unabhängig vom Durchlaufen einer Kurve oder einer Steigung bzw. eines Gefälles stets in einer konstanten Ausrichtung ohne Querneigung geführt wird.

Ausgewählte Fahrwagen, in der dargestellten Ausführungsform jeder zweite Fahrwagen der Reihe, sind jeweils mit einem Tragwagen 10 gekoppelt. Die Tragwagen 10 sind entlang zweier paralleler, mit Abstand von den Fahrschienen 4a, 4b angeordneten Tragschienen 12a, 12b geführt. Jeder Tragwagen 10 ist mit mindestens einem Lastaufnahmeelement versehen, wobei in der dargestellten Ausführungsform jeder Tragwagen 10 mit zwei unabhängig voneinander betätigbaren Lastaufnahmeelementen 14a, 14b ausgestattet ist. Die Tragschienen 12a, 12b sind in einem festgelegten örtlichen Höhenabstand h von den Fahrschienen 4a, b, angeordnet, so dass sichergestellt ist, dass unabhängig von einem horizontalen, ansteigenden, abfallenden oder kurvenförmigen Verlauf der Fahrwagenführung 4 die Lastaufnahmeelemente 14a, b eines jeden Tragwagens 10 an jeder Stelle der Fahrwagenführung 4 eine neutrale oder horizontale Stellung einnehmen.

Da die Tragwagen 10 bezüglich der Förderrichtung 6 des Sortierförderers nachlaufend mit den Fahrwagen 2 gekoppelt sind, verlaufen die Tragschienen 12a, b bei einem ansteigenden Verlauf der Fahrwagenführung 4 (Fig. 1) in einem Abstand von den Fahrschienen 4a, b oberhalb davon, wobei der Abstand umso größer ist, je größer die örtliche Steigung der Fahrwagenführung 4 ist. Umgekehrt sind die Tragschienen 12a, b in einem Abstand von den Fahrschienen 4a, b unterhalb davon angeordnet (Fig. 2), wenn die Fahrwagenführung 4 mit Gefälle angeordnet ist, wobei der Abstand umso größer ist, je größer die Steigung des Gefälles ist. Dies gilt selbstverständlich unter der Annahme, dass die Kopplung zwischen Fahrwagen und Tragwagen so eingerichtet ist, dass die Tragschienen 12a, b bei einem horizontalen Verlauf der Fahrschienen 4a, b im Wesentlichen in gleicher Höhe wie die Fahrschienen verlaufen, was im Sinne eines geringstmöglichen Platzbedarfs des Sortierförderers zweckmäßig ist.

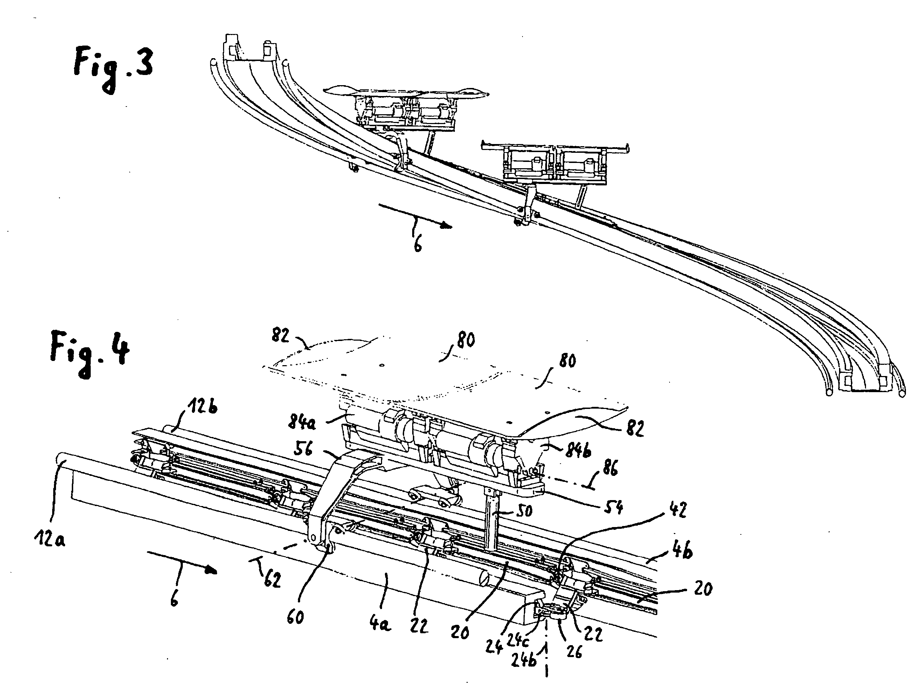

Fig. 3 verdeutlicht, dass die beiden Fahrschienen 4a und 4b zweckmäßigerweise stets, auch bei Durchlaufen einer Kurve, in einer Richtung quer zur Fahrtrichtung 6 gesehen in gleicher Höhe angeordnet sind. Gleiches gilt für die beiden Tragschienen 12a und 12b, so dass sowohl die Fahrwagen 2 als auch die Tragwagen 10 stets im Wesentlichen eine konstante Ausrichtung in Querrichtung aufweisen, bevorzugt horizontal ohne Querneigung.

Fig. 4 bis 6 zeigen den Aufbau von Fahrwagen 2 und Tragwagen 10 mehr im Einzelnen. Jeder Fahrwagen 2 besteht im Wesentlichen aus einem Fahrwagenlängsträger 20 und einer damit fest verbundenen Fahrwagentraverse 22, die in dem dargestellten Beispiel an einem in Fahrtrichtung 6 gesehen hinteren Ende des Fahrwagenlängsträgers 20 angeordnet ist, so dass der Fahrwagen 2 in der Draufsicht eine im Wesentlichen T-förmige Gestalt aufweist. Alternativ kann die Fahrwagentraverse am vorderen Ende des Fahrwagenlängsträgers 20 angeordnet sein. An den seitlichen Enden der Fahrwagentraverse 22 sind Tragrollen 24 mit horizontaler Drehachse 24a und Seitenführungsrollen 26 mit senkrechter Drehachse 26a gelagert. Die Drehachse 24a einer jeden Tragrolle 24 ist in einer Aufnahme 24c ausgebildet, die ihrerseits um eine vertikale Lenkachse 24b, die mit Abstand vor der Drehachse 24a angeordnet ist, schwenkbar an einem jeweiligen seitlichen Ende der Traverse 22 gelagert ist. Diese Schwenkbeweglichkeit um eine vertikale Achse der Aufnahme 24c, durch die jede Tragrolle 24 nachlaufend gelagert ist, ermöglicht, dass sich die Tragrollen in Horizontalkurven selbsttätig so ausrichten, dass die Drehachse 24a jeder Tragrolle stets durch den Mittelpunkt der jeweiligen Kurve verläuft.

Die Führungsschienen 4a, b besitzen einen nach innen offenen C-förmigen Querschnitt mit einer horizontalen Lauffläche 28, auf der die Tragrollen 24 laufen, und einer senkrechten Führungsfläche 30, auf der die Seitenführungsrollen 26 laufen. Eine der Lauffläche 28 parallel gegenüberstehende Führungsfläche 32 dient im Wesentlichen der Sicherheit gegen Abheben oder Herausheben der Tragrollen 24 und wird beim normalen Fahrbetrieb nicht von diesen berührt.

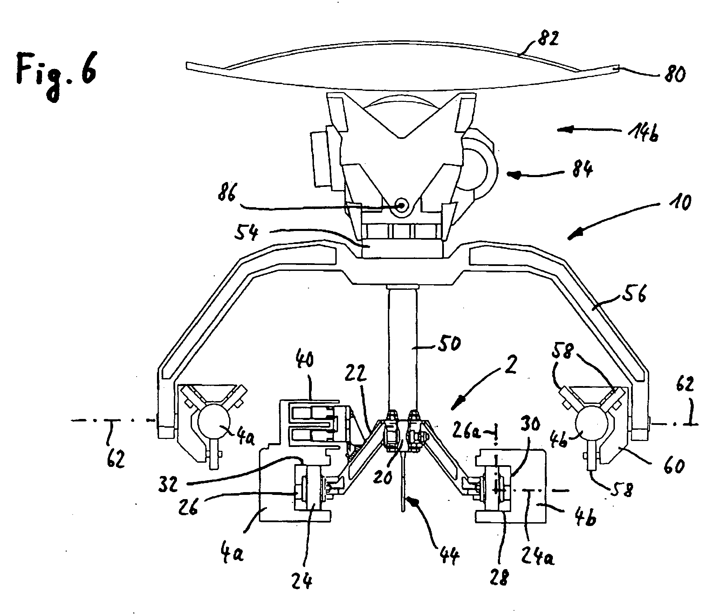

Fig. 6 zeigt oberhalb einer der Fahrschienen 4a eine Stromschiene 40, die parallel zu der Fahrschiene 4a verläuft und eine Reihe elektrischer Leiter aufnimmt, die von jeweils zugeordneten, an der Fahrwagentraverse 22 gehaltenen Schleifkontakten berührt werden und mit denen Strom und Steuerimpulse bzw. -informationen zur Betätigung und Ansteuerung der elektromotorisch betätigten Tragelemente 14a, b übertragen werden. Alternativ wird ein System zur berührungslosen Energie- und Signalübertragung eingesetzt. Energie kann beispielsweise induktiv übertragen werden, während Informationen bevorzugt über stationäre Sender, beispielsweise über Infrarotsignale, übertragen werden.

Jeder Fahrwagen 2 ist an einem vorderen, der Fahrwagentraverse 22 gegenüberliegenden Ende mittels eines Koppelgelenks 42 mit einem hinteren Ende eines in Fahrtrichtung 6 gesehen vorauslaufenden Fahrwagens 2 gekoppelt. Der Antrieb der Fahrwagen 2 erfolgt in dem dargestellten Ausführungsbeispiel über ein Antriebsschwert 44, das senkrecht unter dem Fahrwagenlängsträger 20 angebracht ist und entweder zur Bildung eines Induktionsantriebs als metallische Induktionsplatte ausgebildet sein kann, wobei in Abständen zwischen den Fahrschienen 4a, b Induktionseinheiten angeordnet sind, oder aber als Reibplatte mit seitlichen Reibflächen zum Zusammenwirken mit einem oder mehreren, in Abständen angeordneten Reibradantrieben.

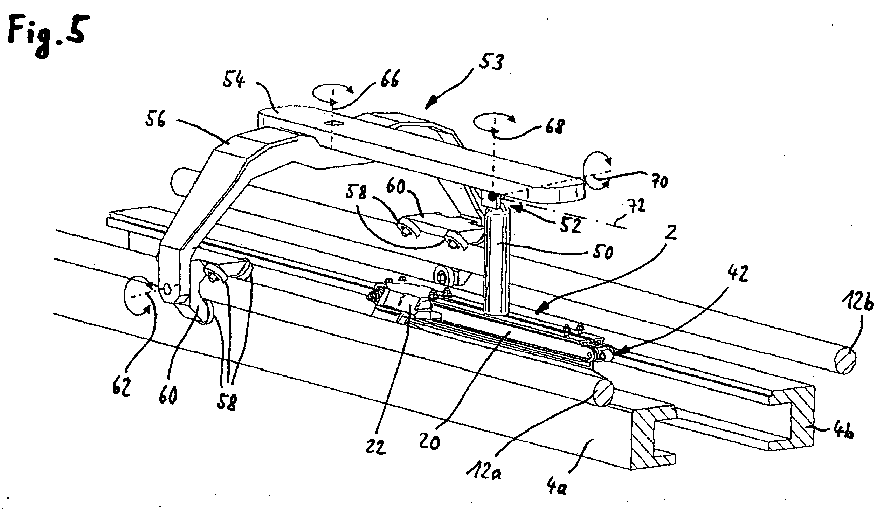

Auf dem Fahrwagen 2, bevorzugt etwa in der Mitte des Fahrwagenlängsträgers 20, ist eine senkrechte Stütze 50 befestigt, an deren oberem Ende ein in allen Richtungen drehbares Gelenk 52, etwa Kardan- oder Kugelgelenk, angeordnet ist, mit dem der Tragwagen 10 nachlaufend angekoppelt ist. Die allseitige Drehbarkeit des Gelenks 52 ist in Fig. 5 durch eine vertikale Drehachse 68, eine horizontale Querachse 70 und eine horizontale Längsachse 72 verdeutlicht. Der Tragwagen 10 weist einen Tragrahmen 53 auf, mit einem Tragwagenlängsträger 54, der im Bereich seines vorderen Endes mit dem Gelenk 52 verbunden ist, und mit einer Tragwagentraverse 56, die mit einem in Fahrtrichtung 6 gesehen hinteren Ende des Tragwagenlängsträgers 54 verbunden ist.

An beiden seitlichen Enden der Tragwagentraverse 56 sind Trag- und Seitenführungsrollen 58 angeordnet, wobei in dem dargestellten Ausführungsbeispiel an jedem Ende der Tragwagentraverse 56 ein Führungswagen 60 um eine horizontale, quer zur Fahrtrichtung 6 verlaufende Führungsachse 62 schwenkbar angelenkt ist, der mit einer Reihe von Trag- und Führungsrollen 58 versehen ist.

Die Anordnung der Trag- und Führungsrollen 58 ergibt sich anhand Fig. 5 bis 7, die zeigen, dass der Führungswagen 60 vier obere Trag- und Führungsrollen 58 aufweist, deren Drehachsen unter 45° zur Horizontalen abgewinkelt und quer zur Fahrtrichtung 6 angeordnet sind und die paarweise vor und hinter der Führungsachse 62 positioniert sind. Aufgrund der schrägen Anordnung übernehmen diese Rollen sowohl Trag- als auch Seitenführungsfunktion. Eine weitere Führungsrolle 58 mit horizontaler Drehachse ist unterhalb der Tragschiene 12a bzw. 12b angeordnet, so dass die insgesamt 5 Trag- und Führungsrollen 58 die jeweilige Tragschiene 12a, b mit kreisrundem Querschnitt ohne nennenswertes Spiel umgreifen. Aufgrund dieser Anordnung kann der Führungswagen 60 außer in Längsrichtung der Tragschiene bedarfsweise leicht drehend um die Tragschiene verlagert werden, so dass ein Ausgleich von Positionstoleranzen der Tragschienen 12a, b untereinander und/oder in Bezug auf die Fahrschienen 4a, b möglich ist. Eine weitere Ausgleichsmöglichkeit für Positionstoleranzen ergibt sich durch die drehbare Anlenkung der Führungswagen um die Führungsachse 62 an der Tragwagentraverse 56.

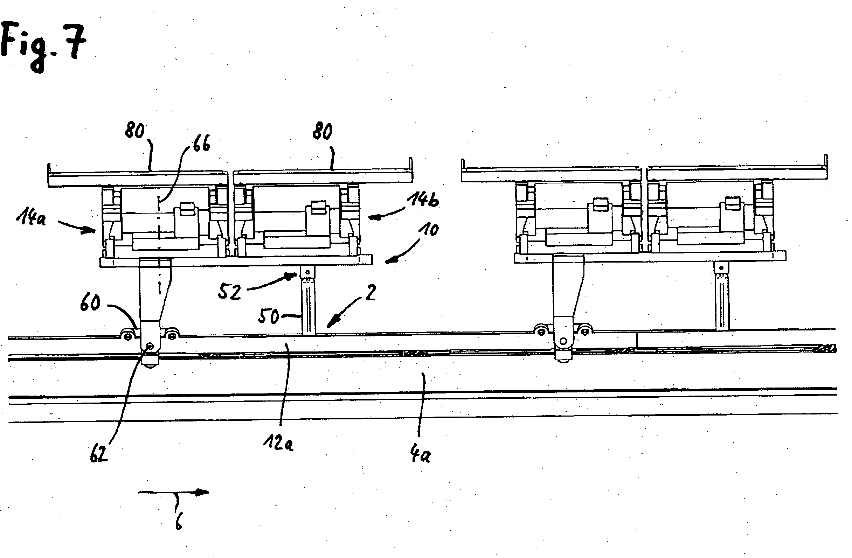

Wie sich aus Fig. 7 ergibt, ist die Führungsachse 62 nachlaufend hinter der Schwenkachse 66 der Tragwagentraverse 56 angeordnet, in Bezug auf die Fahrtrichtung 6, was sich positiv auf die Fahrstabilität auswirken kann.

Die Tragwagentraverse 56 ist bevorzugt nicht starr mit dem Tragwagenlängsträger 54 verbunden, sondern um eine vertikale Schwenkachse 66 drehbar daran angelenkt. Die dadurch geschaffene Möglichkeit einer Verdrehung zwischen Tragwagenlängsträger 54 und Tragwagentraverse 56 hat den Vorteil, dass die Tragwagentraverse 56 bei einer Kurvenfahrt des Tragwagens 10 stets auf den Mittelpunkt der örtlichen Krümmung, d.h. radial, ausgerichtet ist, wobei auch die Führungsachse 62 radial ausgerichtet ist, was den Vorteil hat, dass keinerlei Zwangskräfte auf die Trag- und Führungsrollen 58 entstehen. Fig. 5 erläutert die Anordnung der Führungsachse 62, der Schwenkachse 66 und des bereits beschriebenen Gelenks 52 zwischen Fahrwagen 2 und Tragwagen 10, das eine relative Drehbewegung um eine vertikale Achse 68, eine horizontale Querachse 70 und eine horizontale Längsachse 72 zwischen Fahrund Tragwagen zulässt.

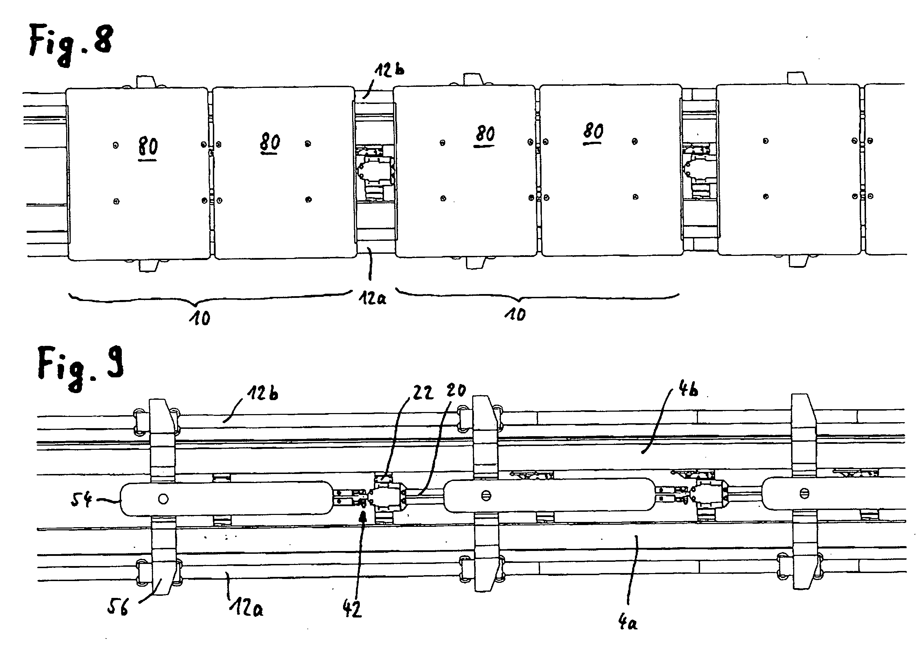

Jeder Tragwagen 10 ist mit mindestens einem, im dargestellten Ausführungsbeispiel mit zwei Lastaufnahmeelementen 14a, b versehen, wie insbesondere Fig. 4, 7 und 8 zeigen. Jedes Lastaufnahmeelement 14a, b ist auf dem Tragwagenlängsträger 54 gehalten, wobei die Lastaufnahmeelemente 14a, b eines Tragwagens in Fahrtrichtung 6 gesehen hintereinander angeordnet sind. Jedes Lastaufnahmeelement 14a, b weist eine Tragschale 80 auf, die an ihrem jeweils außenliegenden vorderen oder hinteren Ende mit einer senkrechten Begrenzungswand 82 versehen ist. Jede Tragschale 80 ist auf einer elektromechanischen Betätigungseinheit 84 mit Antriebsmotor 84a, beispielsweise Schrittmotor, und Getriebe 84b montiert, wodurch ein elektromechanisches Kippelement gebildet ist. Jede Tragschale 80 eines Tragwagens 10 kann unabhängig von der jeweils anderen Tragschale 80 um eine horizontale, in Fahrtrichtung 6 verlaufende Kippachse 86 zur einen oder anderen Seite des Tragwagens 10 gekippt werden, beispielsweise um einen Winkel im Bereich zwischen 20° und 45°, so dass ein auf der Tragschale 80 aufgenommenes Stückgutteil seitlich abrutscht und in an sich bekannter Weise an eine Empfangsstation des Sortierförderers abgegeben wird, beispielsweise auf einen quer oder schräg zur Fahrrichtung 6 angeordneten Bandförderer.

Bei dem dargestellten Ausführungsbeispiel besteht aufgrund der Anordnung von zwei Lastaufnahmeelementen je Tragwagen die vorteilhafte Möglichkeit, zur Aufnahme und/oder Abgabe von Stückgutteilen, die länger sind als eine einzelne Tragschale 80, das Stückgutteil auf beiden Tragschalen zu platzieren und die Tragschalen in einer die Aufnahme oder Abgabe unterstützenden Weise zeitlich aufeinanderfolgend zu kippen bzw. in eine horizontale Neutralstellung zu bringen. Die hierzu benötigten Steuerinformationen bzw. Steuerimpulse und Antriebsströme werden über die oben beschriebene Stromschiene 40 von einer zentralen Steuereinheit des Sortierförderers übertragen.

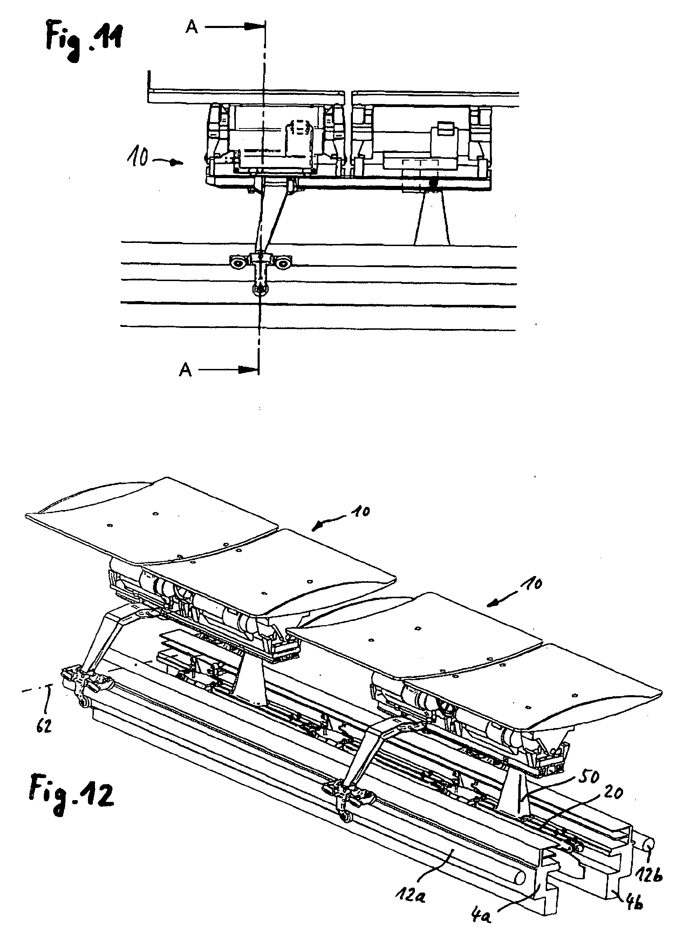

Fig. 11 bis 15 erläutern eine Modifikation des Tragwagens im Bereich der Führungswagen 60. Anders als in Fig. 4 bis 6 dargestellt, endet die Tragwagentraverse 56 mittig oberhalb der Tragschienen 12a, b, so dass sich kein Kippmoment der Führungswagen 60 relativ zu den Tragschienen 12a, b bzw. den Enden der Tragwagentraverse 56 ergibt. Wie die Seitenansicht eines Tragwagens in Fig. 11 zeigt, ist die Führungsachse 62 noch weiter nachlaufend hinter der Schwenkachse 66 angeordnet, als dies bei der Ausführung nach Fig. 1 bis 10 der Fall ist, wobei insbesondere auf Fig. 7 verwiesen wird.

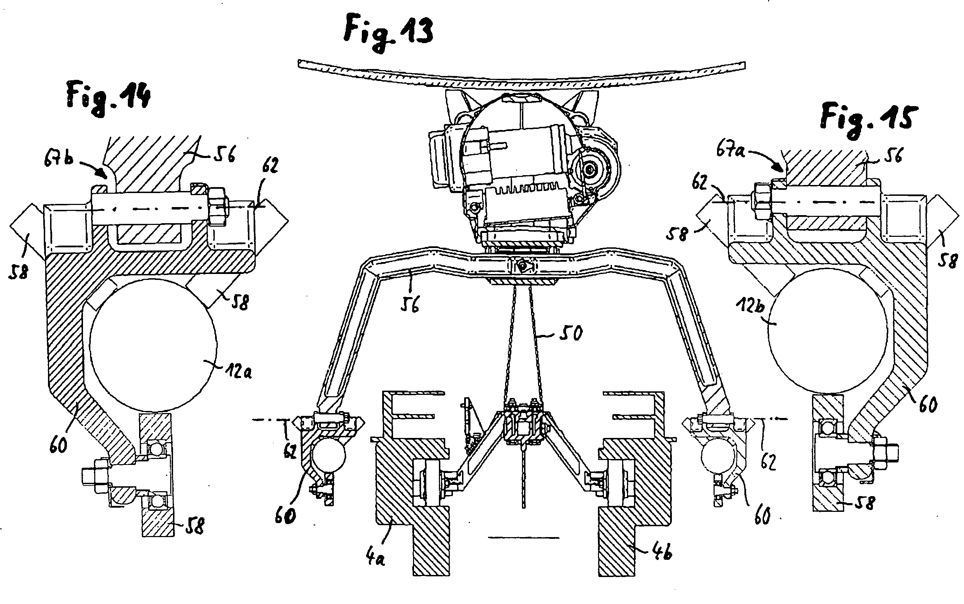

Fig. 13 bis 15 zeigen Schnittansichten entlang der in Fig. 11 mit A-A gekennzeichneten Schnittebene, wobei Fig. 14 und 15 vergrößerte Ausschnittsdarstellungen aus Fig. 13 im Bereich der Führungswagen zeigen. Der Hauptunterschied gegenüber der Ausführungsform nach Fig. 1 bis 10, wobei insbesondere Fig. 6 mit Fig. 13 vergleichbar ist, besteht in der Anbindung der Führungswagen 60 an die Tragwagentraverse 56. Die Enden der Tragwagentraverse 56 befinden sich nunmehr mittig oberhalb der Tragschienen 12a, 12b und sind jeweils mittels eines Führungsbolzens 64, dessen Längsachse mit der Führungsachse 62 übereinstimmt, mit den Führungswagen 60 verbunden. Jeder Führungsbolzen 64 bildet eine Gleitlagerung mit einer den Führungsbolzen aufnehmenden Führungsbohrung 65 der Tragwagentraverse 56. Trag- und Führungsrollen 58 sind an dem Führungswagen 60 gelagert, entsprechend der Ausführungsform nach Fig. 1 bis 10. Als Besonderheit ist einer der Führungswagen 60 (Fig. 15) als Festlager 67a ohne Bewegungsspiel in Richtung der Führungsachse 62 an der Tragwagentraverse 56 gelagert, während der andere Führungswagen 60 (Fig. 14) in Form eines Loslagers 67b mit Bewegungsspiel in Richtung der Führungsachse 62 an der Tragwagentraverse 56 gelagert ist.

### Bezugszeichenliste

- 2: Fahrwagen
- 4: Fahrwagenführung
- 4a, b: Fahrschiene
- 6: Fahrtrichtung (Förderrichtung)
- 10: Tragwagen
- 12a, b: Tragschiene
- 14a, b: Lastaufnahmeelement
- 20: Fahrwagenlängsträger
- 22: Fahrwagentraverse
- 24: Tragrolle
- 24a: Drehachse
- 24b: Lenkachse
- 24c: Aufnahme
- 26: Seitenführungsrolle
- 26a: Drehachse
- 28: Lauffläche
- 30: Führungsfläche
- 32: Führungsfläche
- 40: Stromschiene
- 42: Koppelgelenk
- 44: Antriebsschwert
- 50: Stütze
- 52: Gelenk
- 53: Tragrahmen
- 54: Tragwagenlängsträger
- 56: Tragwagentraverse
- 58: Trag- und Führungsrolle
- 60: Führungswagen
- 62: Führungsachse
- 64: Führungsbolzen
- 65: Führungsbohrung
- 66: Schwenkachse
- 67a: Festlager
- 67b: Loslager
- 68: vertikale Drehachse (von 52)
- 70: horizontale Querachse (von 52)
- 72: horizontale Längsachse (von 52)
- 80: Tragschale
- 82: Begrenzungswand
- 84: Betätigungseinheit
- 84a: Antriebsmotor
- 84b: Getriebe
- 86: Kippachse

- h: vertikaler Abstand (4a, b von 12a, b)

## Patentansprüche

1. Sortierförderer mit einer Reihe von Fahrwagen (2), die entlang einer Fahrwagenführung (4) mit zwei beabstandeten parallelen Fahrschienen (4a, 4b) in einer Fahrtrichtung (6) antreibbar umlaufend geführt sind, **dadurch gekennzeichnet, daß** mindestens ein Fahrwagen (2) mittels eines in allen Richtungen drehbaren Gelenks (52) mit einem Tragwagen (10) gekoppelt ist, der entlang zweier beabstandeter paralleler, mit Abstand von den Fahrschienen (4a, 4b) angeordneter Tragschienen (12a, 12b) in Fahrtrichtung (6) umlaufend geführt ist und einen Tragrahmen (53) aufweist, der auf dem Gelenk (52) und bezüglich der Fahrtrichtung (6) nachlaufend hinter dem Gelenk (52) auf jeder Tragschiene (12a, 12b) abgestützt ist, wobei die Tragschienen (12a, 12b) in einem vorgegebenen vertikalen Abstand von den Fahrschienen (4a, 4b) angeordnet sind und auf dem Tragrahmen (53) ein Lastaufnahmeelement (14a, 14b) zum Aufnehmen und Abgeben von Stückgutteilen angeordnet ist, das sich stets in einer horizontalen Position befindet.

2. Sortierförderer nach Anspruch 1, **dadurch gekennzeichnet, dass** die beiden Fahrschienen (4a, 4b) so angeordnet sind, dass die Fahrwagen quer zur Fahrtrichtung (6) gesehen stets horizontal ausgerichtet sind, wobei die Fahrschienen (4a, 4b) in einer Richtung quer zur Fahrtrichtung (6) gesehen auf gleicher Höhe liegen können.

3. Sortierförderer nach Anspruch 1 oder 2, **dadurch gekennzeichnet, dass** die Tragschienen (12a, 12b) als Rundprofil ausgebildet sein können und so angeordnet sind, dass die Tragwagen quer zur Fahrtrichtung (6) gesehen stets horizontal ausgerichtet sind, wobei die Tragschienen (12a, 12b) in einer Richtung quer zur Fahrtrichtung (6) gesehen auf gleicher Höhe liegen können.

4. Sortierförderer nach einem der vorangehenden Ansprüche, **dadurch gekennzeichnet, dass** jeder Fahrwagen (2) auf jeder Fahrschiene (4a, 4b) mit einer Tragrolle (24) und einer Seitenführungsrolle (26) abgestützt ist, wobei die Tragrolle (24) auf einer Aufnahme (24c) gehalten sein kann, die um eine vertikale Lenkachse (24b) schwenkbar nachlaufend an dem Fahrwagen (2) angelenkt ist.

5. Sortierförderer nach einem der vorangehenden Ansprüche, **dadurch gekennzeichnet, dass** jeder Fahrwagen (2) an einem bezüglich der Fahrtrichtung (6) vorderen oder hinteren Ende eine Fahrwagentraverse (22) aufweist, an deren seitlichen Enden jeweils eine Tragrolle (24) und eine Seitenführungsrolle (26) gelagert sind.

6. Sortierförderer nach einem der vorangehenden Ansprüche, **dadurch gekennzeichnet, dass** jeder Fahrwagen an einem bezüglich der Fahrtrichtung (6) vorderen Ende mit einem hinteren Ende eines vorausfahrenden Fahrwagens (2) gekoppelt ist.

7. Sortierförderer nach einem der vorangehenden Ansprüche, **dadurch gekennzeichnet, dass** jeder Tragwagen (10) eine Tragwagentraverse (56) aufweist, die an seitlichen Enden auf den Tragschienen (12a, 12b) abgestützt ist.

8. Sortierförderer nach Anspruch 7, **dadurch gekennzeichnet, dass** an jedem seitlichen Ende der Tragwagentraverse (56) eine Tragrolle und eine Seitenführungsrolle angeordnet sind.

9. Sortierförderer nach Anspruch 7, **dadurch gekennzeichnet, dass** an jedem seitlichen Ende der Tragwagentraverse (56) ein Führungswagen (60) angeordnet ist, der mindestens zwei in Fahrtrichtung (6) voneinander beabstandete Trag- und Seitenführungsrollen (58) aufweist, mit denen er auf einer Tragschiene (12a, 12b) abgestützt ist, und der um eine quer zur Fahrtrichtung (6) und horizontal verlaufende Führuangsachse (62) schwenkbar mit der Tragwagentraverse (56) verbunden ist.

10. Sortierförderer nach Anspruch 7, 8 oder 9, **dadurch gekennzeichnet, dass** die Tragwagentraverse (56) durch ein um eine vertikal verlaufende Schwenkachse (66) bewegbares Schwenklager schwenkbar mit einem sich in Fahrtrichtung (6) erstreckenden Tragwagenlängsträger (54) verbunden ist, der seinerseits über das Gelenk (52) auf dem Fahrwagen (2) abgestützt ist.

11. Sortierförderer nach einem der vorangehenden Ansprüche, **dadurch gekennzeichnet, dass** jeder zweite Fahrwagen (2) mit einem Tragwagen (10) gekoppelt ist.

12. Sortierförderer nach einem der vorangehenden Ansprüche, **dadurch gekennzeichnet, dass** das Lastaufnahmeelement (14a, 14b) als elektrisch betätigbare Kippvorrichtung (80, 84, 86) ausgebildet ist.

13. Sortierförderer nach Anspruch 9 und 10, **dadurch gekennzeichnet, dass** die Führungsachse (62) in Fahrtrichtung (6) gesehen nachlaufend in Bezug auf die Schwenkachse (66) angeordnet ist.

14. Sortierförderer nach Anspruch 9, 10 oder 13, **dadurch gekennzeichnet, dass** einer der Führungswagen (60) mittels eines Festlagers (67a) ohne Bewegungsspiel in Richtung der Führungsachse (62) an der Tragwagentraverse (56) gelagert ist, während der andere Führungswagen (60) mittels eines Loslagers (67b) mit Bewegungsspiel in Richtung der Führungsachse (62) an der Tragwagentraverse (56) gelagert ist.

## Claims

1. Sorting conveyor with a series of driven carriages (2), which can be driven continuously and are guided along a track (4) with two parallel-spaced running rails (4a, 4b) in a conveying direction (6), **characterized in that** at least one driven carriage (2) is coupled by means of an articulated joint (52), rotatable in all directions, with a carrier carriage (10), that is continuously guided in the conveying direction along two parallel-spaced mounting rails (12a, 12b) arranged at a distance from the running rails (4a, 4b) and has a carrier frame (53), which is supported on the articulated joint (52) and relative to the conveying direction (6) trailing behind the articulated joint (52) on each mounting rail (12a, 12b), wherein the mounting rails (12a, 12b) are located at a preset vertical distance from the running rails (4a, 4b) and a load-bearing member (14a, 14b), which is always in a horizontal position, is arranged on the carrier frame (53) for loading and unloading individual articles.

2. Sorting conveyor according to claim 1, **characterized in that** the two running rails (4a, 4b) are arranged so that the driven carriages, viewed diagonally to the conveying direction (6), are always horizontally aligned, wherein the running rails (4a, 4b), viewed in a diagonal direction to the conveying direction (6), can lie at the same height.

3. Sorting conveyor according to claim 1 or 2, **characterized in that** the mounting rails (12a, 12b) are formed with a round profile and arranged so that, viewed diagonally to the conveying direction (6), the carrier carriages are always horizontally aligned wherein, viewed in a diagonal direction to the conveying direction (6), the mounting rails (12a, 12b) can lie at the same height.

4. Sorting conveyor according to any one of the above claims, **characterized in that** each driven carriage (2) is supported on each running rail (4a, 4b) with an idler (24) and a lateral guide roller (26), wherein the idler (24) can be held in a socket (24c), which is pivotally linked about a vertical radial axis (24b) trailingly to the driven carriage (2).

5. Sorting conveyor according to any one of the above claims, **characterized in that** each driven carriage (2) at a front or rear end, relative to the conveying direction (6), has a driven carriage cross arm (22), at the lateral ends of which an idler (24) and a lateral guide roller (26) are mounted in each case.

6. Sorting conveyor according to any one of the above claims, **characterized in that** each driven carriage at a front end, relative to the conveying direction (6), is coupled with a rear end of a driven carriage (2) running ahead.

7. Sorting conveyor according to any one of the above claims, **characterized in that** each carrier carriage (10) has a carrier carriage cross arm (56), which is supported at lateral ends on the mounting rails (12a, 12b).

8. Sorting conveyor according to claim 7, **characterized in that** an idler and a lateral guide roller are arranged at each lateral end of the carrier carriage cross arm (56).

9. Sorting conveyor according to claim 7, **characterized in that** a guide carriage (60), which has at least two bearing- and lateral guide rollers (58) spaced apart from each other in the conveying direction (6), with which it is supported on a mounting rail (12a, 12b), and which is pivotally linked to the carrier carriage cross arm (56) about a horizontally running guide axis (62) diagonal to the conveying direction (6), is arranged at each lateral end of the carrier carriage cross arm (56).

10. Sorting conveyor according to claim 7, 8 or 9, **characterized in that** the carrier carriage cross arm (56) is pivotally linked, by an articulated bearing movable about a vertically running pivot axis (66), to a carrier carriage longitudinal member (54) extending in the conveying direction (6), which in turn is supported by the articulated joint (52) on the driven carriage (2).

11. Sorting conveyor according to any one of the above claims, **characterized in that** each second driven carriage (2) is coupled with a carrier carriage (10).

12. Sorting conveyor according to any one of the above claims, **characterized in that** the load-bearing member (14a, 14b) is configured as electrically-actuated tilting device (80, 84, 86).

13. Sorting conveyor according to claim 9 and 10, **characterized in that**, viewed in the conveying direction (6), the guide axis (62) is arranged trailingly relative to the pivot axis (66).

14. Sorting conveyor according to claim 9, 10 or 13, **characterized in that** one of the guide carriages (60) is mounted on the carrier carriage cross arm (56) by means of a fixed bearing (67a) without play towards the guide axis (62), while the other guide carriage (60) is mounted on the carrier carriage cross arm (56) by means of a floating bearing (67b) with play towards the guide axis (62).

## Revendications

1. Convoyeur de tri avec une série de chariots menés (2), qui peuvent être entraînés en mode continu et sont guidés le long d'une voie (4) avec deux rails de roulement (4a, 4b) espacés parallèlement suivant un sens de transport (6), **caractérisé en ce qu'**au moins un chariot mené (2) est accouplé grâce à un raccord articulé (52), rotatif dans tous les sens, à un chariot de support (10), lequel est continuellement guidé dans le sens de transport le long de deux rails de montage espacés parallèlement (12a, 12b) agencés à une certaine distance par rapport aux rails de roulement (4a, 4b) et possède un châssis de support (53), qui prend appui sur le raccord articulé (52) et, par rapport au sens de transport (6), se trouve en position arrière du raccord articulé (52) sur chaque rail de montage (12a, 12b), cas dans lequel les rails de montage (12a, 12b) sont positionnés à une distance verticale prédéfinie par rapport aux rails de roulement (4a, 4b), et un élément de prise de charge (14a, 14b), qui est toujours en position horizontale, lequel est agencé sur le châssis de support (53) pour charger et décharger des articles individuels.

2. Convoyeur de tri selon la revendication 1, **caractérisé en ce que** les deux rails de roulement (4a, 4b) sont agencés de sorte que les chariots menés, lorsqu'ils sont vus diagonalement par rapport au sens de transport (6), sont toujours alignés horizontalement, cas dans lequel les rails de roulement (4a, 4b), lorsqu'ils sont vus suivant un sens diagonal par rapport au sens de transport (6), peuvent se situer à la même hauteur.

3. Convoyeur de tri selon la revendication 1 ou 2, **caractérisé en ce que** les rails de montage (12a, 12b) sont formés avec un profil rond et agencés de sorte que, lorsqu'ils sont vus diagonalement par rapport au sens de transport (6), les chariots de support sont toujours alignés horizontalement, cas dans lequel, lorsqu'ils sont vus suivant un sens diagonal par rapport au sens de transport (6), les rails de montage (12a, 12b) peuvent se situer à la même hauteur.

4. Convoyeur de tri selon l'une quelconque des revendications précédentes, **caractérisé en ce que** chaque chariot mené (2) est soutenu sur chaque rail de roulement (4a, 4b) à l'aide d'un galet (24) et d'un rouleau de guidage latéral (26), cas dans lequel le galet (24) peut être maintenu dans une douille (24c) laquelle est reliée de façon pivotante autour d'un axe radial vertical (24b) en position arrière vers le chariot mené (2).

5. Convoyeur de tri selon l'une quelconque des revendications précédentes, **caractérisé en ce que** chaque chariot mené (2) possède, au niveau d'une extrémité avant ou arrière par rapport au sens de transport (6), une traverse de chariot mené (22) aux extrémités latérales de laquelle sont montés dans chaque cas un galet (24) et un rouleau de guidage latéral (26).

6. Convoyeur de tri selon l'une quelconque des revendications précédentes, **caractérisé en ce que** chaque chariot mené est couplé, au niveau d'une extrémité avant par rapport au sens de transport (6), à une extrémité arrière d'un chariot mené (2) qui se déplace devant lui.

7. Convoyeur de tri selon l'une quelconque des revendications précédentes, **caractérisé en ce que** chaque chariot de support (10) possède une traverse de chariot de support (56) qui est soutenu sur les rails de montage (12a, 12b) au niveau de ses extrémités latérales.

8. Convoyeur de tri selon la revendication 7, **caractérisé en ce qu'**un galet et un rouleau de guidage latéral sont agencés au niveau de chaque extrémité latérale de la traverse de chariot de support (56).

9. Convoyeur de tri selon la revendication 7, **caractérisé en ce qu'**un chariot-guide (60), qui possède au moins deux rouleaux porteurs et de guidage latéral (58) espacés l'un de l'autre dans le sens de transport (6), grâce auxquels il est soutenu sur un rail de montage (12a, 12b) et qui est lié de façon pivotante à la traverse de chariot de support (56) autour d'un axe de guidage (62) à déplacement horizontal, en diagonale par rapport au sens de transport (6), est agencé au niveau de chaque extrémité latérale de la traverse de chariot de support (56).

10. Convoyeur de tri selon la revendication 7, 8 ou 9, **caractérisé en ce que** la traverse du chariot de support (56) est relié de façon pivotante, par un palier articulé mobile autour d'un axe de pivot à déplacement vertical (66), à un élément longitudinal de chariot de support (54) s'étendant dans le sens de transport (6), lequel est soutenu à son tour par le raccord articulé (52) sur le chariot mené (2).

11. Convoyeur de tri selon l'une quelconque des revendications précédentes, **caractérisé en ce que** chaque deuxième chariot mené (2) est accouplé à un chariot de support (10).

12. Convoyeur de tri selon l'une quelconque des revendications précédentes, **caractérisé en ce que** l'élément de prise de charge (14a, 14b) est configuré en tant que dispositif de basculement à actionnement électrique (80, 84, 86).

13. Convoyeur de tri selon la revendication 9 et 10, **caractérisé en ce que**, lorsqu'il est vu suivant le sens de transport (6), l'axe de guidage (62) est agencé en position arrière par rapport à l'axe de pivot (66).

14. Convoyeur de tri selon la revendication 9, 10 ou 13, **caractérisé en ce que** l'un des chariots-guides (60) est monté sur la traverse du chariot de support (56) au moyen d'un palier fixe (67a) sans aucun jeu vers l'axe de guidage (62), alors que l'autre chariot-guide (60) est monté sur la traverse de chariot de support (56) au moyen d'un palier flottant (67b) dont le jeu est dirigé vers l'axe de guidage (62).
